# EUROPEAN PATENT SPECIFICATION

(11) **EP 1 410 186 B1**
(45) Date of publication and mention of the grant of the patent: **23.05.2007**
(21) Application number: 01271580.1
(22) Date of filing: 12.12.2001
(51) Int. Cl.: G06F 9/445

(54) **INTERRUPT CONTROLLER FOR A MICROPROCESSOR**
INTERRUPT-STEUERUNG FÜR EINEN MIKROPROZESSOR
CONTROLEUR D'INTERRUPTION POUR MICROPROCESSEUR

(30) Priority: 20.12.2000 DE 10063936
(43) Date of publication of application: 21.04.2004
(73) Proprietor: Thomson Licensing, 92100 Boulogne-Billancourt (FR)
(72) Inventor: BRUNHEIM, Rüdiger, 78089 Unterkirnach (DE)
(74) Representative: Kurth, Dieter
(86) International application number: PCT/EP2001/014611
(87) International publication number: WO 2002/050672

(56) References cited:
- EP-A- 0 316 138
- EP-A- 0 443 557
- PATENT ABSTRACTS OF JAPAN vol. 006, no. 192 (P-145), 30 September 1982 (1982-09-30) & JP 57 101949 A (MATSUSHITA ELECTRIC IND CO LTD), 24 June 1982 (1982-06-24)
- "METHOD OF IMPROVING PARALLEL PORT INTERRUPTS IN PERSONAL COMPUTERS" IBM TECHNICAL DISCLOSURE BULLETIN, IBM CORP. NEW YORK, US, vol. 35, no. 1A, 1 June 1992 (1992-06-01), pages 54-58, XP000308771 ISSN: 0018-8689

## Description

The invention relates to an interrupt controller for a microprocessor having a plurality of event memories which are combined to form at least one group and each have an input for a setting signal and an output for an event memory signal which portrays the state of the event memory, where the setting signal for an event memory becomes active when activation of an event signal associated with this event memory is detected, where the event memory signals are connected to an interrupt signal for the microprocessor, where the microprocessor has read and write access to the event memory signals via a data bus, and where the event memories each have an input for a resetting signal.

This interrupt controller is intended for use, by way of example, in devices for recording or reproducing information on an optical information medium.

Interrupt controllers interrupt the program execution in a microprocessor when particular events occur, so that the microprocessor is able to execute a program routine, called an interrupt routine, before the interrupted program execution is continued. The occurrence of such an event is signalled to the microprocessor in the form of an interrupt signal when activation of a corresponding event signal is detected. According to the use or task of the microprocessor, each event signal or interrupt signal may have a dedicated interrupt routine associated with it. Alternatively, different event signals or interrupt signals can be assigned the same interrupt routine.

In addition, interrupt controllers are known which can be used to activate or deactivate individual interrupt signals specifically. Since it may sometimes not be possible to interrupt program execution and the interrupt signal may actually be inactive again by the time interruption is possible again, the activation of an event signal is generally stored until the microprocessor actually executes the associated interrupt routine. For this purpose, an "event memory" is provided which is set when activation of an event signal is detected - for example as a result of edge detection - and which is reset when the associated interrupt routine is executed.

Resetting of the event memories can, in principle, be triggered either by the microprocessor itself without influence by the interrupt routine or by program instructions in the interrupt routine.

Resetting of the event memories exclusively by the microprocessor without program influence is generally possible only if each interrupt signal has a dedicated interrupt routine associated with it and a means of deactivating the interrupt signal is arranged upstream of the event memory.

However, the means of deactivating the interrupt signal is typically arranged downstream of the event memory, so that events which occurred during brief deactivation of the interrupt signal can also be processed. However, this arrangement demands that it be possible to reset the event memory associated with a deactivated interrupt signal selectively on a specific basis before renewed activation in order to prevent an interruption from being unintentionally triggered by an event which is a long way in the past, for example in the case of a long period of deactivation. This requires a means of resetting using program commands.

An interrupt controller comprising means for holding priority information to acknowledge the generated interrupt request not only when the priority of the generated interrupt request is higher than the predetermined priority, but also when the priority of the generated interrupt request is the same as the predetermined priority already has been disclosed according to EP-A-0443557. Whether or not this nesting function is realized is controlled by the information set in the flag.

If a particular interrupt routine is called by different events and hence by different interrupt signals, the interrupt routine is generally able to establish which event or which events have triggered the interrupt routine. For this purpose, the microprocessor has read access to the event memory signals. The event memories are reset only when the interrupt routine has read the state of the event memories. This also requires a means of resetting using program commands.

In practice, the event memories are often combined into groups for access by the microprocessor in order to improve effectiveness. Thus, for example in the case of a microprocessor having a data bus width of 8 bits, 8 respective event memories are combined to form an 8-bit value. An 8-bit processor is thus able to access a maximum of 8 event memories at the same time. If there are more than 8 event memories, then such a processor needs to access event memories or groups of event memories in a plurality of successive steps.

Different methods for resetting the event memories are known from practice.

One option is for all the event memories in a group to be reset by a reset circuit as soon as the microprocessor has read the state of the group. This method does not permit individual event memories to be reset specifically, however. In addition, it requires very complex implementation of the reset circuit in order to guarantee that only those event memories which the microprocessor has detected as active when reading the group are reset, since, during read access by the microprocessor, an interrupt signal for the group may become active and hence the state of the group is altered during reading. If an event memory is reset without the microprocessor having detected the event memory as active, this event is not processed and is lost.

It is likewise known practice for all the event memories in a group or in all the groups to be reset by a program command instead of a reset circuit, with the same problems arising as in the case cited above, particularly if the state of the group is altered by new events during reading or between reading and resetting.

It is also known practice to allow the microprocessor both read access and write access to the event memories. This means that specific alteration, in particular resetting, of individual event memories is possible even when they have been combined in a group. The microprocessor reads the state of the group, alters the data value which has been read such that the event memories to be reset are erased, and writes the new state back to the group. This method may also lose events unprocessed if the state of the group is altered by new events during reading or between reading and writing. In this case, the microprocessor detects the event memories for the new events during reading as still inactive and writes this inactive state back to them, as a result of which the events are lost.

The present invention is thus based on the object of designing an interrupt controller of the type mentioned in the introduction such that the event memories can be altered individually or else in groups on a specific basis without events being unintentionally lost in the process, which means that they.cannot be processed.

This object is achieved by means of the features specified in the independent Patent Claim 1. Advantageous refinements are specified in the dependent patent claims.

The inventive interrupt controller is characterized in that the resetting signal for a particular event memory in a group becomes active when the microprocessor effects write access to the group containing this event memory using a first write signal and, at the same time, that individual signal from the microprocessor which is associated with this event memory is active on the data bus. The inventive interrupt controller thus permits the individual event memories to be reset specifically and securely by program commands.

In one advantageous implementation option for the inventive interrupt controller, the resetting signal for each event memory in a group is obtained in the form of an output signal from a logic AND function which logically combines that individual signal from the microprocessor on the data bus which is associated with the respective event memory with the first write signal which the microprocessor uses to access the event memories in this group.

Advantageously, each event memory is assigned, as individual signal from the microprocessor, the same bit of a data byte as is transferred to the microprocessor as the state of the respective event memory during read access to the appropriate group.

In one advantageous development of the inventive interrupt controller, the resetting signal for a particular event memory in a group additionally also becomes active when an interrupt acknowledgement signal from the microprocessor indicates that the interrupt routine associated with this event memory is being executed. This embodiment permits individual event memories to be reset specifically and securely both by program commands and by processor signals.

In this case, the resetting signal for each event memory in a group is advantageously obtained in the form of an output signal from a logic OR function which logically combines the appropriate interrupt acknowledgement signal with the output signal from the logic AND function, which in turn logically combines that individual signal from the microprocessor on the data bus which is associated with the respective event memory with the first write signal which the microprocessor uses to access the event memories in this group.

It is particularly advantageous if the inventive interrupt controller is designed such that the microprocessor has write access to each group of event memories using two different memory addresses, so that the microprocessor has write access to the event memories in a group using the first write signal and a second write signal.

In this case, the event memories can not only be specifically and securely reset by program commands but can also be specifically and securely set. To this end, the inventive interrupt controller is advantageously designed such that the setting signal for a particular event memory becomes active when the microprocessor effects write access to the group containing this event memory using the second write signal and, at the same time, that individual signal from the microprocessor which is associated with this event memory is active on the data bus. With this variant of an inventive interrupt controller, it is advantageous if the setting signal for each event memory in a group is obtained in the form of an output signal from a logic OR function which logically combines an event signal associated with the respective event memory with the output signal from a logic AND function which, in turn, logically combines that individual signal from the microprocessor on the data bus which is associated with the respective event memory with the second write signal which the microprocessor uses to access the event memories in this group.

It is particularly advantageous in this context if the second memory address which the microprocessor uses to effect write access to a group is identical to the memory address which it uses to effect read access to this group, since the "read-modify-write" instructions known for a large number of microprocessors can then be used.

In another advantageous embodiment of the inventive interrupt controller, which permits not only the specific, secure resetting of individual event memories but also write access by program commands, a particular event memory is set when the microprocessor uses the second write signal to effect write access to the group containing this event memory and the individual signal associated with this event memory is active on the data bus. A particular event memory is reset when the microprocessor uses the second write signal to effect write access to the group containing this event memory and the individual signal associated with this event memory is inactive on the data bus.

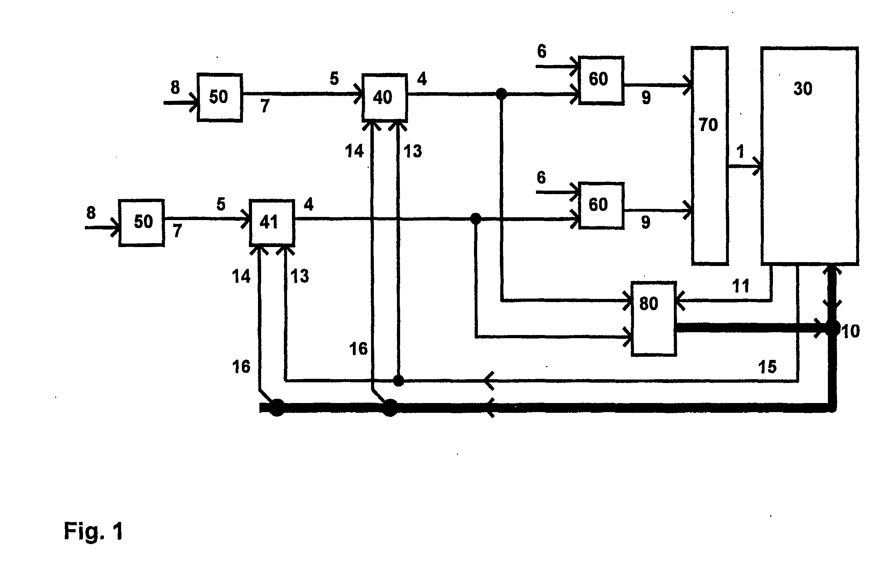

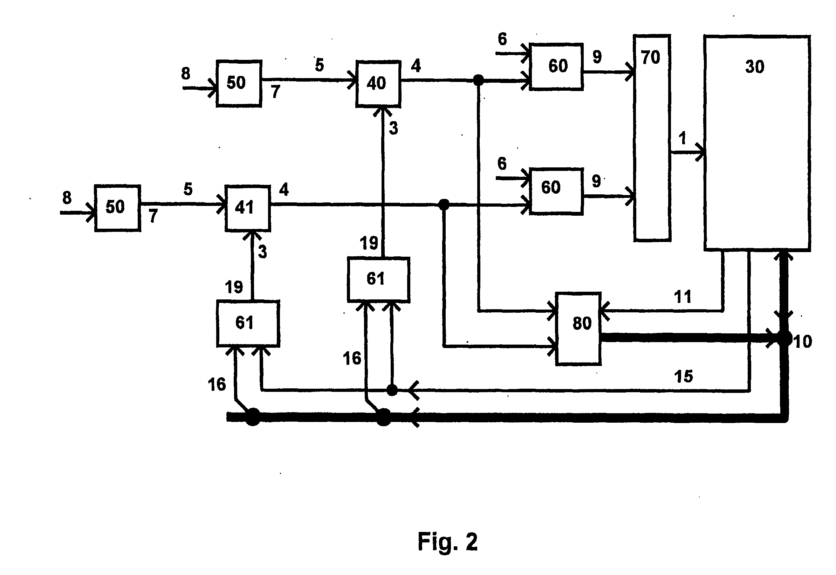

In principle, the event memories can be altered, reset and set asynchronously or in clocked fashion, depending on connection. In principle, there are various options for advantageously refining and developing the disclosure of the present invention. In this regard, reference is made first to the claims subordinate to Patent Claim 1 and secondly to the explanation below of seven exemplary embodiments of the invention with reference to the drawings - Figures 2 to 8. To illustrate the inventive concept, the prior art on which the invention is based is also explained with reference to Figure 1.

The invention is explained in more detail below with reference to drawings, in which:
- Figure 1: shows the basic circuit diagram for an interrupt controller from the prior art,
- Figure 2: shows the basic circuit diagram for an inventive interrupt controller permitting specific resetting of the event memories as a result of write action by the microprocessor,
- Figure 3: shows the basic circuit diagram for an inventive interrupt controller permitting specific resetting of the event memories both as a result of write action by the microprocessor and as a result of interrupt acknowledgement signals from the microprocessor,
- Figure 4: shows the basic circuit diagram for an inventive interrupt controller permitting both specific resetting and specific setting of the event memories as a result of write action by the microprocessor,
- Figure 5: shows the basic circuit diagram for an inventive interrupt controller permitting specific resetting of the event memories both as a result of write action by the microprocessor and as a result of interrupt acknowledgement signals from the microprocessor, and specific setting of the event memories as a result of write action by the microprocessor,
- Figure 6: shows the basic circuit diagram for an inventive interrupt controller permitting specific resetting of the event memories as a result of write action by the microprocessor, and asynchronous alteration of the event memories as a result of write action by the microprocessor,
- Figure 7: shows the basic circuit diagram for an inventive interrupt controller permitting specific resetting of the event memories both as a result of write action by the microprocessor and as a result of interrupt acknowledgement signals from the microprocessor, and asynchronous alteration of the event memories as a result of write action by the microprocessor, and
- Figure 8: shows the basic circuit diagram for an inventive interrupt controller permitting specific resetting of the event memories both as a result of write action by the microprocessor and as a result of interrupt acknowledgement signals from the microprocessor, and clocked alteration of the event memories as a result of write action by the microprocessor.

In the figures, identical circuit elements and signals have been provided with standard reference numerals.

The interrupt controller for a microprocessor 30, which interrupt controller is known from the prior art and is shown in Figure 1, in this case comprises, by way of example, two event memories 40 and 41 which are combined to form a group. Each event memory 40 and 41 has an input for a setting signal 5, an input for a data clock signal 13 and for a data input signal 14, and an output for an event memory signal 4 portraying the state of the respective event memory 40 or 41. The setting signal 5 for an event memory 40 or 41 becomes active when activation of an event signal 8 associated with this event memory 40 or 41 is detected by an appropriate edge detection block 50. In this case, an event pulse signal 7 is transmitted from the edge detection block 50 to the event memory 40 or 41 as the setting signal 5. Arranged downstream of each of the event memories 40 and 41 is a respective interrupt activation section in the form of a logic AND function block 60 which logically combines an activation signal 6 for the interrupt events with the respective event memory signal 4. The output signals from the logic AND function blocks 60 are referred to as interrupt signals 9, which, in the example illustrated in this case, are routed via a logic OR function block 70 to an interrupt input 1 of the microprocessor 30.

When a read signal 11 from the microprocessor 30 is active, the microprocessor 30 can use a data bus 10 to retrieve the event memory signals 4 of the event memories 40 and 41 from a read register 80. In addition, the microprocessor 30 has write access to the event memories 40 and 41 when a write signal 15 from the microprocessor 30 is active. On the basis of the timing of the write signal 15 applied to the event memory 40 or 41 as a data clock signal 13, the individual signal 16 which is on the data bus 10 for the respective event memory 40 or 41 is then written to the event memory 40 or 41 as data input signal 14. In this case, each event memory 40 and 41 therefore has new information written to it with each write access operation by the microprocessor 30.

In the inventive interrupt controllers shown in Figures 2 to 8, each event memory 40 and 41 is respectively constructed from a memory cell having an input for a setting signal 5 and an input for a resetting signal 3 and also an output for an event memory signal 4. The event memories 40 and 41 have respectively been combined to form a group.

As in the case of the known interrupt controller shown in Figure 1, the setting signal 5 for an individual event memory 40 or 41 becomes active when activation of the event signal 8 associated with this event memory 40 or 41 is detected. The event memory signal 4 from each event memory 40, 41 is connected to an interrupt signal 9 for the microprocessor 30 via a logic AND function block 60, so that the respective event memory signal 4 can be activated or deactivated using an activation signal 6. Advantageously, the activation signal 6 is in the form of a state signal for a data memory of the microprocessor 30.

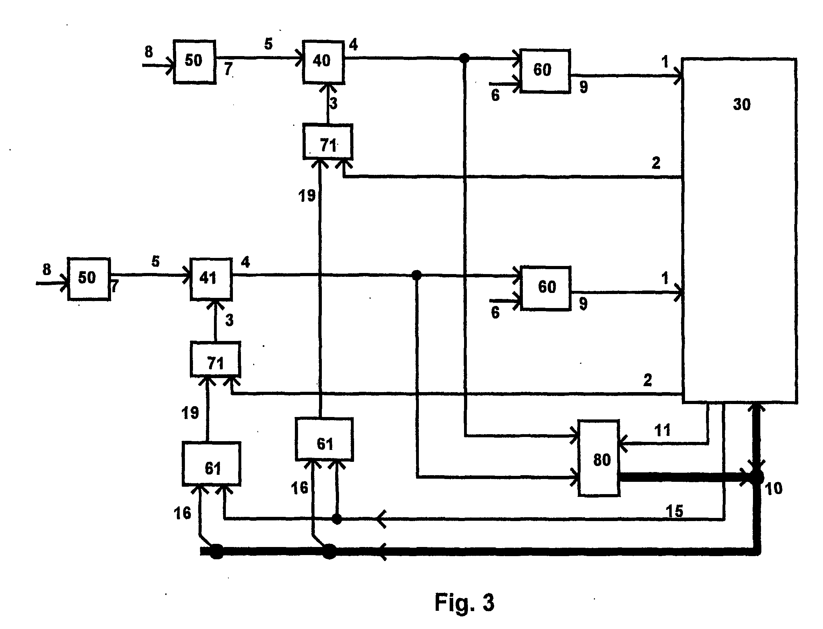

The interrupt signals 9 are connected to an interrupt input 1 of the microprocessor 30 either directly, as in the case of Figures 3, 5, 7 and 8, or else via a logic OR function block 70, as in the case of Figures 2, 4 and 6. Using the logic OR function block 70, the interrupt signals 9 from a plurality of events can be combined on one interrupt input 1.

In the case of the inventive interrupt controllers shown in Figures 2 to 8, the microprocessor 30 also has read access to the event memory signals 4 from all the event memories 40 and 41 in a group as data values, as in the case of the interrupt controller shown in Figure 1. Each memory state of the read register 80 thus represents one bit of a data byte for the microprocessor 30.

In the interrupt controller shown in Figure 2, the resetting signal 3 for an event memory 40 or 41 becomes active when the microprocessor 30 effects write access to the group containing this event memory 40 or 41 and, at the same time, that individual signal 16 from the microprocessor 30 which is associated with this event memory 40 or 41 in the group is active on the data bus 10. This advantageously involves using the same bit of a data byte by virtue of the state of the event memory 40 or 41 also being transferred to the microprocessor 30 during read access to the appropriate group. To this end, the write signal 15 from the microprocessor 30 and the individual signal 16 for an event memory 40 or 41 are logically combined by means of a logic AND function block 61 whose output signal forms a software-controlled resetting signal 19 for the respective event memory 40 or 41. The embodiment of an inventive interrupt controller shown in Figure 2 thus permits specific, secure resetting of individual event memories 40 and 41 by program commands .

In the case of the interrupt controller shown in Figure 3, by contrast with the variant shown in Figure 2, the resetting signal 3 for an event memory 40 or 41 additionally also becomes active when an interrupt acknowledgement signal 2 from the microprocessor 30 indicates that the interrupt routine associated with this event memory 40 or 41 is being executed. To this end, the interrupt acknowledgement signal 2 from the microprocessor 30 and the software-controlled resetting signal 19 for the respective event memory 40 or 41 are logically combined by means of a logic OR function block 71 whose output signal forms the resetting signal 3 for the respective event memory 40 or 41. In this variant of an inventive interrupt controller, individual event memories 40 and 41 can be specifically and securely reset both by program commands and by processor signals.

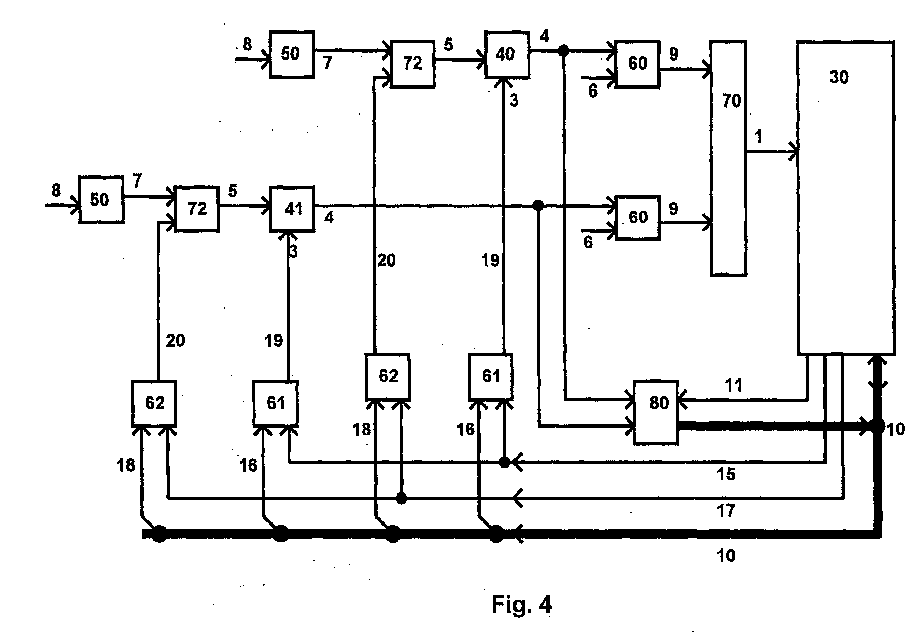

In the inventive interrupt controllers shown in Figures 4 to 8, the microprocessor has write access to each group of event memories 40 and 41 using two different memory addresses.

In the case of write access by the microprocessor 30 under the first memory address using the first write signal 15 from the microprocessor 30, the resetting signal 3 for an event memory 40 or 41 becomes active as described in connection with Figure 2. In addition, the setting signal 5 for an event memory 40 or 41 becomes active not only when activation of the event signal 8 associated with this event memory 40 or 41 is detected, but also when the microprocessor effects write access to the group containing this event memory 40 or 41 under the second memory address using the second write signal 17 from the microprocessor 30 and, at the same time, that individual signal 18 on the data bus 10 which is associated with this event memory 40 or 41 in the group is active. This advantageously involves using the same bit of a data byte by virtue of the state of the appropriate event memory 40 or 41 also being transferred to the microprocessor 30 during read access to the group. In addition, the second memory address, which the microprocessor 30 uses to effect write access to the group, is advantageously identical to the memory address which it uses to effect read access to this group. This is because the "read-modify-write" instructions known for a large number of microprocessors can be used in this case. To this end, the write signal 17 from the microprocessor 30 and the individual signal 18 for an event memory 40 or 41 are logically combined by means of a logic AND function block 62 whose output signal forms a software-controlled setting signal 20 for the respective event memory 40 or 41. This setting signal 20 is logically combined with the event pulse signal 7 by means of a logic OR function block 72. The output signal from the logic OR function block 72 then forms the setting signal 5 for the respective event memory 40 or 41.

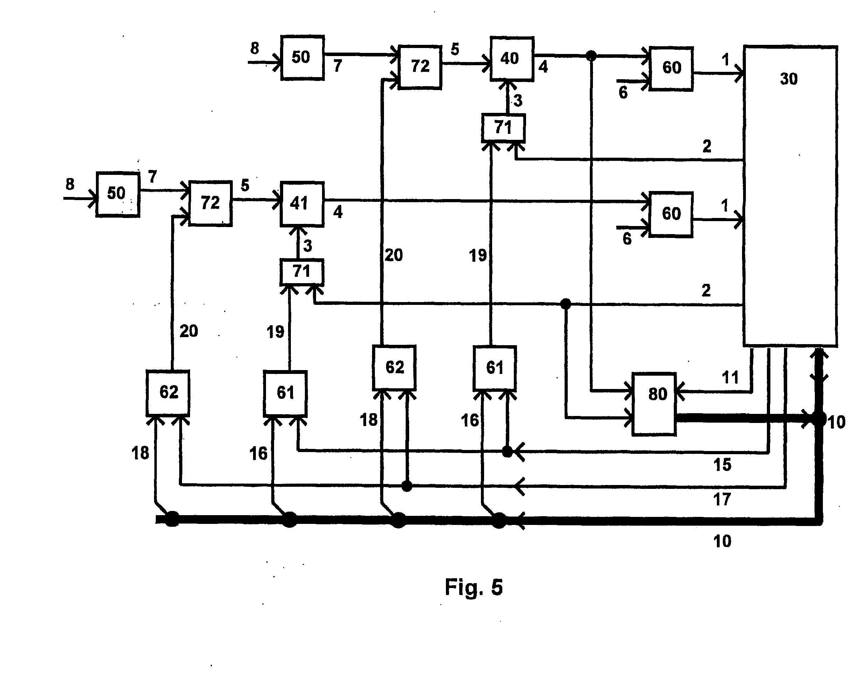

The embodiment of an inventive interrupt controller described above is shown in Figure 4 and permits specific, secure resetting and setting of individual event memories 40 or 41 by program commands. This variant can be combined with the option of resetting using interrupt acknowledgement signals 2, as described in connection with Figure 3, which is shown in Figure 5.

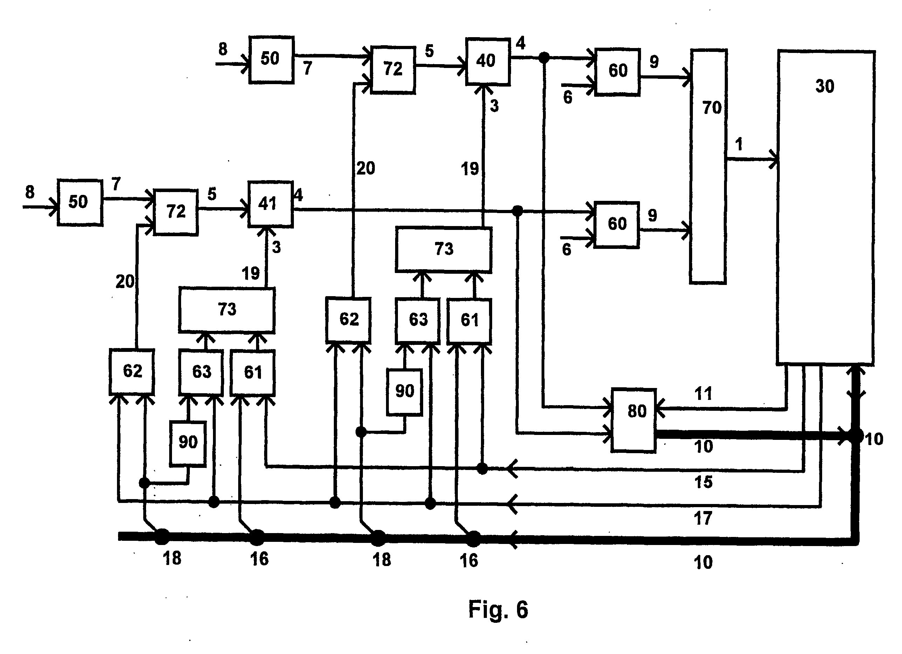

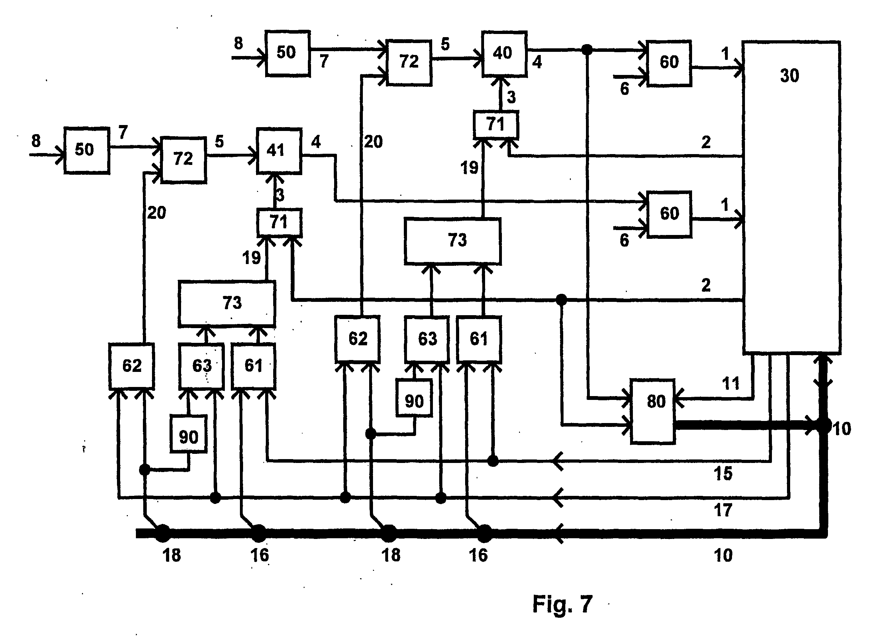

In the variants of an inventive interrupt controller shown in Figures 6 to 8, besides specific resetting of the event memories 40 and 41 as a result of write action by the microprocessor 30, it is also possible for the event memories 40 and 41 to be altered as a result of write action by the microprocessor 30. The event memories 40 and 41 are altered whenever the microprocessor 30 effects write access to the group containing the respective event memory 40 or 41 using the second memory address. In the case of the interrupt controllers shown in Figures 6 and 7, in that instance, either the appropriate setting signal 5 becomes active, if that individual signal 18 from the microprocessor 30 which is associated with this event memory 40 or 41 in the group is active, or the corresponding resetting signal 3 becomes active, if that individual signal 18 from the microprocessor 30 which is associated with this event memory 40 or 41 in the group is inactive. This advantageously involves using the same bit of a data byte by virtue of the state of the respective event memory 40 or 41 also being transferred to the microprocessor 30 during read access to the appropriate group. In addition, the second memory address which the microprocessor 30 uses to effect write access to the group is advantageously identical to the memory address which it uses to effect read access, so that the "read-modify-write" instructions known for a large number of microprocessors can be used.

In the embodiment of an inventive interrupt controller shown in Figure 6, the event memories 40 and 41 are specifically reset and altered using a respective logic OR function block 73 whose output signal forms the reset signal 3 for an event memory 40 or 41 and which logically combines the output signals from two logic AND function blocks 61 and 63 with one another. The logic AND function block 61 logically combines the first write signal 15 from the microprocessor 30 with that individual signal 16 on the data bus 10 of the microprocessor 30 which is associated with the respective event memory 40 or 41, which produces the specific resetting of the event memory 40 or 41. The logic AND function block 63 logically combines the second write signal 17 from the microprocessor 30 with that individual signal 18 on the data bus 10 of the microprocessor 30 which is associated with the respective event memory 40 or 41 but which has been inverted previously using an inverting block 90. In addition, that individual signal 18 on the data bus 10 of the microprocessor 30 which is associated with the respective event memory 40 or 41 is also logically combined with the second write signal 17 from the microprocessor 30 by means of a logic AND function block 62. This logic AND function block 62 delivers a software-controlled setting signal 20 which is logically combined with the event pulse signal 7 from the edge detection block 50 for the respective event memory 40 or 41 by means of a logic OR function block 72. The output signal from this logic OR function block 72 is used as the setting signal 5 for the respective event memory 40 or 41.

By contrast with the circuit arrangement shown in Figure 6, the circuit arrangement shown in Figure 7 is complemented merely by the option of the event memories 40 and 41 also being specifically reset by interrupt acknowledgement signals 2 from the microprocessor 30.

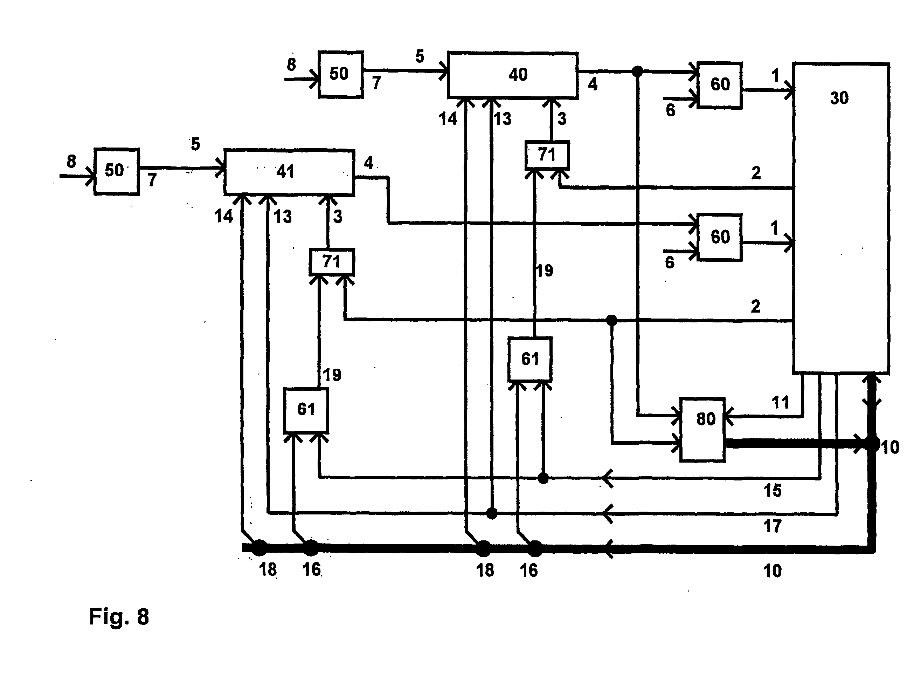

In the case of the interrupt controller shown in Figure 8, the event memories 40 and 41 are each directly overwritten with their associated individual signal 18 which is on the data bus 10 when the second write signal 17 is active. To this end, the write signal 17 is routed to the event memory 40 or 41 as a data clock signal 13, while the individual signal 18 which is on the data bus 10 forms a data input signal 14 for the event memory 40 or 41.

The embodiments of the invention which have been described here are indicated merely by way of example. On the basis of the disclosure of the invention, a person skilled in the art can implement other embodiments of an interrupt controller which remain within the scope of the invention.

## Claims

1. Interrupt controller for a microprocessor (30) having a plurality of event memories (40, 41) which are combined to form at least one group and each have an input for a setting signal (5) and an output for an event memory signal (4) which portrays the state of the event memory (40, 41),
- where the setting signal (5) for an event memory (40, 41) is arranged to become active when activation of an event signal (8) associated with this event memory (40, 41) is detected,
- where the event memory signals (4) are connected to an interrupt signal (9) for the microprocessor (30),
- where the microprocessor (30) has read and write access to the event memory signals (4) via a data bus (10), and
- where the event memories (40, 41) each have an input for a resetting signal (3),
**characterized in that** the resetting signal (3) for an event memory (40, 41) in a group is arranged to become active when the microprocessor (30) effects write access to the group containing this event memory (40, 41) using a first write signal (15) and, at the same time, that individual signal (16) from the microprocessor (30) which is associated with this event memory (40, 41) is active on the data bus (10).

2. Interrupt controller according to Claim 1, **characterized in that** the resetting signal (3) for each event memory (40, 41) in a group is obtained in the form of an output signal from a logic AND function (61) which logically combines that individual signal (16) from the microprocessor (30) on the data bus (10) which is associated with the respective event memory (40, 41) with the first write signal (15) which the microprocessor (30) uses to access the event memories (40, 41) in this group.

3. Interrupt controller according to one of Claims 1 or 2, **characterized in that** each event memory (40, 41) is assigned, as individual signal (16, 18) from the microprocessor (30), the same bit of a data byte as is transferred to the microprocessor (30) as the state of the respective event memory (40, 41) during read access to the appropriate group.

4. Interrupt controller according to one of Claims 1 to 3, **characterized in that** the resetting signal (3) for an event memory (40, 41) in a group also is arranged to become active when an interrupt acknowledgement signal (2) from the microprocessor (30) indicates that the interrupt routine associated with this event memory (40, 41) is being executed.

5. Interrupt controller according to Claim 4, **characterized in that** the resetting signal (3) for each event memory (40, 41) in a group is obtained in the form of an output signal from a logic OR function (71) which logically combines the appropriate interrupt acknowledgement signal (2) with the output signal from the logic AND function (61), which in turn logically combines that individual signal (16) from the microprocessor (30) on the data bus (10) which is associated with the respective event memory (40, 41) with the first write signal (15) which the microprocessor (30) uses to access the event memories (40, 41) in this group.

6. Interrupt controller according to one of Claims 1 to 5, **characterized in that** the microprocessor (30) has write access to each group of event memories (40, 41) using two different memory addresses, so that the microprocessor (30) has write access to the event memories (40, 41) in a group using the first write signal (15) and a second write signal (17), and **in that** the setting signal (5) for an event memory (40, 41) is arranged to become active when the microprocessor (30) effects write access to the group containing this event memory (40, 41) using the second write signal (17) and, at the same time, that individual signal (18) from the microprocessor (30) which is associated with this event memory (40, 41) is active on the data bus (10).

7. Interrupt controller according to Claim 6, **characterized in that** the setting signal (5) for each event memory (40, 41) in a group is obtained in the form of an output signal from a logic OR function (72) which logically combines an event signal (8) associated with the respective event memory (40, 41) with the output signal from a logic AND function (62) which, in turn, logically combines that individual signal (18) from the microprocessor (30) on the data bus (10) which is associated with the respective event memory (40, 41) with the second write signal (17) which the microprocessor (30) uses to access the event memories (40, 41) in this group.

8. Interrupt controller according to one of Claims 6 or 7, **characterized in that** the second memory address which the microprocessor (30) uses to effect write access to a group is identical to the memory address which it uses to effect read access to this group.

9. Interrupt controller according to one of Claims 6 to 8, **characterized in that** an event memory (40, 41) is arranged to be set when the microprocessor (30) uses the second write signal (17) to effect write access to the group containing this event memory (40, 41) and the individual signal (18) associated with this event memory (40, 41) is active on the data bus (10), and **in that** an event memory (40, 41) is arranged to be reset when the microprocessor (30) uses the second write signal (17) to effect write access to the group containing this event memory (40, 41) and the individual signal (18) associated with this event memory (40, 41) is inactive on the data bus (10).

10. Device for recording or reproducing information on an optical information medium with an interrupt controller according to one of Claims 1 to 9.

## Patentansprüche

1. Interrupt Controller für einen Mikroprozessor (30) mit mehreren zu mindestens einer Gruppe zusammengefassten Ereignisspeichern (40, 41), die jeweils einen Eingang für ein Setz-Signal (5) und einen Ausgang für ein den Zustand des Ereignisspeichers (40, 41) wiedergebendes Ereignisspeichersignal (4) aufweisen,
- wobei das Setz-Signal (5) eines Ereignisspeichers (40, 41) so ausgelegt ist, dass es aktiv wird, wenn ein Aktivwerden eines diesem Ereignisspeicher (40, 41) zugeordneten Ereignissignals (8) erkannt wird,
- wobei die Ereignisspeichersignale (4) mit einem Interrupt-Signal (9) für den Mikroprozessor (30) verbunden sind,
- wobei die Ereignisspeichersignale (4) für den Mikroprozessor (30) über einen Datenbus (10) lesend und schreibend zugänglich sind und
- wobei die Ereignisspeicher (40, 41) jeweils einen Eingang für ein Rücksetz-Signal (3) aufweisen,
**dadurch gekennzeichnet, dass** das Rücksetz-Signal (3) eines Ereignisspeichers (40, 41) einer Gruppe so ausgelegt ist, dass es aktiv wird, wenn der Mikroprozessor (30) auf die Gruppe dieses Ereignisspeichers (40, 41) über ein erstes Schreibsignal (15) schreibend zugreift und gleichzeitig das diesem Ereignisspeicher (40, 41) zugeordnete Einzelsignal (16) des Mikroprozessors (30) auf dem Datenbus (10) aktiv ist.

2. Interrupt Controller nach Anspruch 1, **dadurch gekennzeichnet, dass** sich das Rücksetz-Signal (3) jedes Ereignisspeichers (40, 41) einer Gruppe als Ausgangssignal einer Logischen UND-Verknüpfung (61) ergibt, die das dem jeweiligen Ereignisspeicher (40, 41) zugeordnete Einzelsignal (16) des Mikroprozessors (30) auf dem Datenbus (10) mit dem ersten Schreibsignal (15) verknüpft, über das der Mikroprozessor (30) auf die Ereignisspeicher (40, 41) dieser Gruppe zugreift.

3. Interrupt Controller nach einem der Ansprüche 1 oder 2, **dadurch gekennzeichnet, dass** jedem Ereignisspeicher (40, 41) als Einzelsignal (16, 18) des Mikroprozessors (30) dasselbe Bit eines Datenbytes zugeordnet wird, das dem Mikroprozessor (30) beim Lesezugriff auf die entsprechende Gruppe als Zustand des jeweiligen Ereignisspeichers (40, 41) übergeben wird.

4. Interrupt Controller nach einem der Ansprüche 1 bis 3, **dadurch gekennzeichnet, dass** das Rücksetz-Signal (3) eines Ereignisspeichers (40, 41) einer Gruppe so ausgelegt ist, dass es auch dann aktiv wird, wenn ein Interrupt-Quittierurigssignal (2) des Mikroprozessors (30) anzeigt, dass die diesem Ereignisspeicher (40, 41) zugeordnete Interrupt-Routine ausgeführt wird.

5. Interrupt Controller nach Anspruch 4, **dadurch gekennzeichnet, dass** sich das Rücksetz-Signal (3) jedes Ereignisspeichers (40, 41) einer Gruppe als Ausgangssignal einer Logischen ODER-Verknüpfung (71) ergibt, die das entsprechende Interrupt-Quittierungssignal (2) und das Ausgangssignal der Logischen UND-Verknüpfung (61) verknüpft, die wiederum das dem jeweiligen Ereignisspeicher (40, 41) zugeordnete Einzelsignal (16) des Mikroprozessors (30) auf dem Datenbus (10) mit dem ersten Schreibsignal (15) verknüpft, über das der Mikroprozessor (30) auf die Ereignisspeicher (40, 41) dieser Gruppe zugreift.

6. Interrupt Controller nach einem der Ansprüche 1 bis 5, **dadurch gekennzeichnet, dass** dem Mikroprozessor (30) jede Gruppe von Ereignisspeichern (40, 41) unter zwei unterschiedlichen Speicheradressen für den Schreibzugriff zur Verfügung steht, so dass der Mikroprozessor (30) auf die Ereignisspeicher (40, 41) einer Gruppe über das erste Schreibsignal (15) und ein zweites Schreibsignal (17) schreibend zugreifen kann und dass das Setz-Signal (5) eines Ereignisspeichers (40, 41) so ausgelegt ist, dass es aktiv wird, wenn der Mikroprozessor (30) auf die Gruppe dieses Ereignisspeichers (40, 41) über das zweites Schreibsignal (17) schreibend zugreift und gleichzeitig das diesem Ereignisspeicher (40, 41) zugeordnete Einzelsignal (18) des Mikroprozessors (30) auf dem Datenbus (10) aktiv ist.

7. Interrupt Controller nach Anspruch 6, **dadurch gekennzeichnet, dass** sich das Setz-Signal (5) jedes Ereignisspeichers (40, 41) einer Gruppe als Ausgangssignal einer Logischen ODER-Verknüpfung (72) ergibt, die ein dem jeweiligen Ereignisspeicher (40, 41) zugeordnetes Ereignissignal (8) mit dem Ausgangssignal einer Logischen UND-Verknüpfung (62) verknüpft, die wiederum das dem jeweiligen Ereignisspeicher (40, 41) zugeordnete Einzelsignal (18) des Mikroprozessors (30) auf dem Datenbus (10) mit dem zweiten Schreibsignal (17) verknüpft, über das der Mikroprozessor (30) auf die Ereignisspeicher (40, 41) dieser Gruppe zugreift.

8. Interrupt Controller nach einem der Ansprüche 6 oder 7, **dadurch gekennzeichnet, dass** die zweite Speicheradresse, unter der der Mikroprozessor (30) schreibend auf eine Gruppe zugreift, mit der Speicheradresse identisch ist, unter der er lesend auf diese Gruppe zugreift.

9. Interrupt Controller nach einem der Ansprüche 6 bis 8, **dadurch gekennzeichnet, dass** ein Ereignisspeicher (40, 41) so ausgelegt ist, dass er gesetzt wird, wenn der Mikroprozessor (30) über das zweite Schreibsignal (17) auf die Gruppe dieses Ereignisspeichers (40, 41) schreibend zugreift und das diesem Ereignisspeicher (40, 41) zugeordnete Einzelsignal (18) auf dem Datenbus (10) aktiv ist, und dass ein Ereignisspeicher (40, 41) so ausgelegt ist, dass er zurückgesetzt wird, wenn der Mikroprozessor (30) über das zweite Schreibsignal (17) auf die Gruppe dieses Ereignisspeichers (40, 41) schreibend zugreift und das diesem Ereignisspeicher (40, 41) zugeordnete Einzelsignal (18) auf dem Datenbus (10) inaktiv ist.

10. Gerät zur Aufzeichnung oder Wiedergabe von Informationen auf einem optischen Informationsträger mit einem Interrupt Controller nach einem der Ansprüche 1 bis 9.

## Revendications

1. Contrôleur d'interruption pour microprocesseur (30) ayant une pluralité de mémoires d'événement (40, 41) qui sont combinées pour former au moins un groupe et chacune possède une entrée pour un signal de réglage (5) et une sortie pour un signal de mémoire d'événement (4) qui reflète l'état de la mémoire d'événement (40, 41),
- où le signal de réglage (5) pour une mémoire d'événement (40, 41) est agencé pour devenir actif lorsque l'activation d'une mémoire d'événement (8) associée à cette mémoire d'événement (40, 41) est détectée,
- où les signaux de mémoire d'événement (4) sont connectés à un signal d'interruption (9) pour le microprocesseur (30),
- où le microprocesseur (30) possède des accès en lecture et en écriture aux signaux de mémoire d'événement (4) via un bus de données (10), et
- où les mémoires d'événement (40, 41) ont chacune une entrée pour un signal de réinitialisation (3),
**caractérisé en ce que** le signal de réinitialisation (3) pour une mémoire d'événement (40, 41) dans un groupe est agencé pour devenir actif lorsque le microprocesseur (30) effectue un accès en écriture au groupe contenant cette mémoire d'événement (40, 41) en utilisant un premier signal d'écriture (15) et lorsqu'en même temps le signal individuel (16) provenant du microprocesseur (30) qui est associé à cette mémoire d'événement (40, 41) est actif sur le bus de données (10).

2. Contrôleur d'interruption conformément à la revendication 1, **caractérisé en ce que** le signal de réinitialisation (3) pour chaque mémoire d'événement (40, 41) dans un groupe est obtenu sous forme d'un signal de sortie issu d'une fonction logique ET (61) qui combine logiquement ce signal individuel (16) provenant du microprocesseur (30) sur le bus de données (10) qui est associé à la mémoire d'événement respective (40, 41) avec le premier signal d'écriture (15) que le microprocesseur (30) utilise pour accéder aux mémoires d'événement (40, 41) dans ce groupe.

3. Contrôleur d'interruption conformément à l'une des revendications 1 ou 2, **caractérisé en ce qu'**à chaque mémoire d'événement (40, 41) est affecté, comme signal individuel (16, 18) provenant du microprocesseur (30), le même bit de l'octet de données tel qu'il est transféré au microprocesseur (30) en tant qu'état de la mémoire d'événement respective (40, 41) pendant l'accès en lecture au groupe approprié.

4. Contrôleur d'interruption conformément à l'une des revendications 1 à 3, **caractérisé en ce que** le signal de réinitialisation (3) pour une mémoire d'événement (40, 41) dans un groupe est également agencé pour devenir actif lorsqu'un signal d'acquittement d'interruption (2) provenant du microprocesseur (30) indique que la routine d'interruption associée à cette mémoire d'événement (40, 41) est en cours d'exécution.

5. Contrôleur d'interruption conformément à la revendication 4, **caractérisé en ce que** le signal de réinitialisation (3) pour chaque mémoire d'événement (40, 41) dans un groupe est obtenu sous forme d'un signal de sortie issu d'une fonction logique ou (71) qui combine logiquement le signal d'acquittement d'interruption (2) approprié avec le signal de sortie issu de la fonction logique ET (61) qui à son tour combine logiquement ce signal individuel (16) provenant du microprocesseur (30) sur le bus de données (10) qui est associé à la mémoire d'événement respective (40, 41) avec le premier signal d'écriture (15) que le microprocesseur (30) utilise pour accéder aux mémoires d'événement (40, 41) dans ce groupe.

6. Contrôleur d'interruption conformément à l'une des revendications 1 à 5, **caractérisé en ce que** le microprocesseur (30) possède un accès en écriture à chaque groupe de mémoires d'événement (40, 41) en utilisant deux différentes adresses mémoire, de telle sorte que le microprocesseur (30) a un accès en écriture aux mémoires d'événement (40, 41) dans un groupe en utilisant le premier signal d'écriture (15) et un deuxième signal d'écriture (17), et **en ce que** le signal de réglage (5) pour une mémoire d'événement (40, 41) est agencé pour devenir actif lorsque le microprocesseur (30) effectue un accès en écriture au groupe contenant cette mémoire d'événement (40, 41) en utilisant le deuxième signal d'écriture (17) et, lorsqu'en même temps, ce signal individuel (18) provenant du microprocesseur (30) qui est associé à cette mémoire d'événement (40, 41) est actif sur le bus de données (10).

7. Contrôleur d'interruption conformément à la revendication 6, **caractérisé en ce que** le signal de réglage (5) pour chaque mémoire d'événement (40, 41) dans un groupe est obtenu sous forme d'un signal de sortie issu d'une fonction logique OU (72) qui combine logiquement un signal d'événement (8) associé à la mémoire d'événement respective (40, 41) avec le signal de sortie issu de la fonction logique ET (62) qui à son tour combine logiquement ce signal individuel (18) provenant du microprocesseur (30) sur le bus de données (10) qui est associé à la mémoire d'événement respective (40, 41) avec le deuxième signal d'écriture (17) que le microprocesseur (30) utilise pour accéder aux mémoires d'événement (40, 41) dans ce groupe.

8. Contrôleur d'interruption conformément à l'une des revendications 6 ou 7, **caractérisé en ce que** la deuxième adresse mémoire que le microprocesseur (30) utilise pour effectuer l'accès en écriture à un groupe est identique à l'adresse mémoire qu'il utilise pour effectuer l'accès en lecture à ce groupe.

9. Contrôleur d'interruption conformément à l'une des revendications 6 à 8, **caractérisé en ce que** la mémoire d'événement (40, 41) est agencée pour être réglée lorsque le microprocesseur (30) utilise le deuxième signal d'écriture (17) pour effectuer un accès en écriture au groupe contenant cette mémoire d'événement (40, 41) et lorsque le signal individuel (18) associé à cette mémoire d'événement (40, 41) est actif sur le bus de données (10), et **en ce qu'**une mémoire d'événement (40, 41) est agencée pour être réinitialisée lorsque le microprocesseur (30) utilise le deuxième signal d'écriture (17) pour effectuer l'accès en écriture au groupe contenant cette mémoire d'événement (40, 41) et lorsque le signal individuel (18) associé à cette mémoire d'événement (40, 41) est inactif sur le bus de données (10).

10. Dispositif pour enregistrer ou reproduire des informations sur un support d'information optique avec un contrôleur d'interruption conformément à l'une des revendications 1 à 9.
